# EUROPÄISCHE PATENTSCHRIFT

(11) **EP 2 702 287 B1**
(45) Veröffentlichungstag und Bekanntmachung des Hinweises auf die Patenterteilung: **15.07.2015**
(21) Anmeldenummer: 12718151.9
(22) Anmeldetag: 20.04.2012
(51) Int. Cl.: F16C 33/38, F16C 33/40, F16C 33/41, F16C 29/06

(54) **GLIEDERKETTENKÄFIG**
CAGE FORMED OF INTERCONNECTED SEGMENTS
CAGE DE PALIER À ROULEMENT COMPOSÉ DE SEGMENTS INTERCONNECTÉS

(30) Priorität: 29.04.2011 DE 102011017752
(43) Veröffentlichungstag der Anmeldung: 05.03.2014
(73) Patentinhaber: Aktiebolaget SKF, 415 50 Göteborg (SE)
(72) Erfinder: EDELMANN, Ludwig, 97717 Sulzthal (DE); HOFMANN, Joachim, 97456 Dittelbrunn (DE); JESCHKA, Erwin, 97711 Maßbach (DE); KEMMER, Martin, 97440 Werneck (DE); VELDE, Henryk, 97440 Werneck (DE)
(74) Vertreter: Kuhstrebe, Jochen
(86) Internationale Anmeldenummer: PCT/EP2012/057315
(87) Internationale Veröffentlichungsnummer: WO 2012/146549

(56) Entgegenhaltungen:
- WO-A1-2010/074155
- DE-A1- 10 317 049
- US-A- 6 102 572
- US-A- 6 116 783

## Beschreibung

Ausführungsbeispiele der vorliegenden Erfindung betreffen einen Gliederkettenkäfig für ein Linearwälzlager sowie ein Linearwälzlager, also beispielsweise einen Profilschienenwagen. Ein vergleichbarer Gliederkettenköfig bzw. Linearwälzlager ist aus US 6 116 783 A bekannt.

Eine Linearführung ermöglicht eine im Wesentlichen reibungsfreie Translationsbewegung einer oder mehrerer beweglicher Baugruppen oder anderer Komponenten einer Maschine. Je nach Art des verwendeten Führungskonzepts werden hierbei Gleitführungen und Wälzführungen unterschieden. Wälzführungen beruhen auf dem Prinzip der Umwälzung von Wälzkörpern zwischen zwei zu einender sich relativ bewegbaren Führungselementen. Als Wälzkörper dienen beispielsweise Kugeln, Zylinder, Nadeln oder andere Wälzkörperformen.

Zu den Linearwälzlagerführungen gehören unter anderem Profilschienenführungen. Bei Linearwälzlagern ist - trotz des Namens - die Bewegung nicht auf ausschließlich lineare Bewegungen im mathematischen Sinn beschränkt. Sie ermöglichen vielmehr eine translatorische Bewegung im Vergleich zu Rotationsbewegungen, die durch entsprechende Rotationswälzlager geführt werden. Gerade im Bereich der Linearlager werden daher die Begriffe "linear" und "translatorisch" häufig synonym verwendet.

Mit Hilfe von Linearwälzlagern lassen sich präzise Translationsbewegungen in vielfältigen Anwendungssituationen realisieren. Ein Linearwälzlager weist häufig einen Linear- bzw. Führungswagen auf, der auf einer Profilschiene oder einer anderen Führungsschiene linear beweglich angeordnet ist. Der Führungswagen stützt sich hierbei, vermittelt durch eine Mehrzahl von Wälzkörpern, auf einer Profilschiene oder auch einer anderen Laufbahn ab. Während der Bewegung rollen so die Wälzkörper sowohl auf der Profilschiene als auch an einem entsprechenden Gegenbauteil des Führungswagens, dem sogenannten Lastbereich oder Lastkanal, ab.

Die Wälzkörper bewegen sich dabei im Allgemeinen mit der Hälfte der Geschwindigkeit des bewegten Führungselements, bei dem es sich - je nach Einsatzgebiet und der Frage, welche Komponente ortsfest ist - um den Führungswagen oder auch die (Führungs-) Schiene handeln. Die Wälzkörper bewegen sich hierbei jedoch bezüglich beider Komponenten mit dieser Geschwindigkeit.

Bei Anwendungen, in denen der Hub oder die Amplitude der Linearbewegung in die Größenordnung der Abmessung des Führungswagens gerät, ist es daher notwendig, Wälzkörper für die weitere Bewegung in den Lastkanal zurückzuführen. Dies wird durch einen Rücklaufkanal oder Rücklaufbereich erreicht, der im Allgemeinen parallel zu dem Lastkanal verläuft, in dem sich jedoch die Wälzkörper in die entgegengesetzte Richtung bewegen. Zwischen dem Rücklaufbereich und dem Lastbereich sind hierbei zwei Umlenkbereiche angeordnet, in denen die Wälzkörper auf einer gebogenen Bahn vom Lastbereich in den Rücklaufbereich und umgekehrt transportiert werden. Diese Führungen werden im Fall von Kugeln als Wälzkörper aufgrund ihres Umlaufs auch als Kugelumlaufführungen, im allgemeineren Fall als Wälzkörperumlaufführungen bezeichnet.

Eine Kugelumlaufführung zeichnet sich dadurch aus, dass der Führungswagen mittels Kugeln relativ zur Führungsschiene beweglich gelagert ist und dass die Kugeln auf einer in sich geschlossenen, also "endlosen Bahn" umlaufen. Eine Kugelumlaufführung ermöglicht somit im Prinzip eine lineare Bewegung des Linearwagens, die nur durch die Abmessungen der Führungsschiene begrenzt wird.

Bei solchen Linearwälzlagern kann es aufgrund unterschiedlichster Beweggründe ratsam sein, die Wälzkörper in einem Käfig zu führen. Hierdurch können unter anderem die Montage und die Wartung der Linearführung vereinfacht werden oder aber auch unterschiedliche Betriebseigenschaften positiv beeinflusst werden.

Aber auch im Bereich von Linearwälzlagern mit einem begrenzten Hub oder einer begrenzten Amplitude, sogenannten endlichen Linearlagern, können Käfige sinnvoll sein, da diese schon ein Auseinanderrollen der Wälzkörper verhindern können.

Zu diesem Zweck werden heute einteilige Käfige aus Kunststoff eingesetzt.

Ausgehend hiervon besteht daher ein Bedarf daran, die Eigenschaften der Käfige besser an die jeweiligen Aufgabengebiete anpassbar zu machen.

Diese Aufgabe wird durch einen Gliederkettenkäfig gemäß Anspruch 1, ein Linearwälzlager nach Anspruch 9 oder ein Verfahren zum Bereitstellen eines Gliederkettenkäfigs nach Anspruch 10 gelöst.

Ein Gliederkettenkäfig für ein Linearwälzlager gemäß einem Ausführungsbeispiel umfasst ein erstes Kettenglied und ein von dem ersten Kettenglied verschiedenes zweites Kettenglied, wobei das erste und das zweite Kettenglied jeweils eine erste Wälzkörperaufnahme und eine Aufnahme für ein Verbindungselement aufweisen. Der Gliederkettenkäfig umfasst ferner ein Verbindungselement, das mit den Aufnahmen für das Verbindungselement des ersten und des zweiten Kettenglieds gekoppelt ist, wobei die Aufnahme für das Verbindungselement des ersten und des zweiten Kettenglieds ausgebildet ist, um mit dem oder einem anderen Verbindungselement mehrfach lösbar koppelbar zu sein, wobei die kettenglieder auf das Verbindungselement anffädelbar sind. Das erste und/oder das zweite Kettenglied weisen ein erstes Material auf Das Verbindungselement weist ein zweites, von dem ersten Material verschiedenes Material auf. Dabei sind die Wälzlageraufnahmen der Käfigglieder so auszugestalten, dass sie einen Wälzkörper alleine aufnehmen und drehbar halten können. Bei Ausführungsbeispielen kann so eine Wälzlageraufnahme eines Kettenglieds einen ersten und einen zweiten Abschnitt aufweisen, zwischen denen der Wälzkörper gehalten werden kann. Der erste und zweite Abschnitt können hierbei beispielsweise so angeordnet sein, dass sie den Wälzkörper an im Wesentlichen gegenüberliegenden Stellen halten. Zu diesem Zweck kann ein Kettenglied wenigstens abschnittsweise U-förmig ausgebildet sein, wobei die beiden parallel verlaufenden Schenkel des U den ersten bzw. zweiten Abschnitt umfassen und der die beiden parallel verlaufenden Schenkel des U verbindende Abschnitt einen Basisabschnitt des Kettenglieds bildet, der beispielsweise auch die Aufnahme für das Verbindungselement umfassen kann.

Ein Ausführungsbeispiel eines Linearwälzlagers umfasst einen solchen Gliederkettenkäfig sowie eine Mehrzahl von Wälzkörpern, von denen jeweils einer in der ersten Wälzkörperaufnahme des ersten und des zweiten Kettenglieds aufgenommen ist. Es umfasst ferner einen Lastbereich, einen Rücklaufbereich und einen Umlenkbereich, der zwischen dem Lastbereich und dem Rücklaufbereich angeordnet ist, wobei der Gliederkettenkäfig mit der Vielzahl von Wälzkörpern in dem Lastbereich, dem Rücklaufbereich und dem Umlenkbereich angeordnet ist, um dabei zusammen mit Wälzkörpern endlos umzulaufen.

Ein Ausführungsbeispiel eines Verfahrens zum Bereitstellen eines Gliederkettenkäfigs für ein Linearwälzlager umfasst ein Bereitstellen eines ersten und eines zweiten Kettenglieds, wobei das erste und das zweite Kettenglied jeweils eine erste Wälzkörperaufnahme und eine Aufnahme für ein Verbindungselement aufweisen, und wobei das erste und/oder das zweite Kettenglied ein erstes Material aufweisen, sowie ein Bereitstellen eines Verbindungselements, das mit den Aufnahmen für das Verbindungselement des ersten und des zweiten Kettenglieds gekoppelt ist, wobei das Verbindungselement ein zweites, von dem ersten Material verschiedenes Material aufweist. Die Aufnahme für das Verbindungselement des ersten und des zweiten Kettenglieds ist ausgebildet, um mit dem oder einem anderen Verbindungselement mehrfach lösbar koppelbar zu sein, wobei das Bereitstellen des Verbindungselements ein Auffädeln der Kettenglieder auf das Verbindungselement umfass. Dabei sind die Wälzlageraufnahmen der Käfigglieder so auszugestalten, dass sie einen Wälzkörper alleine aufnehmen und drehbar halten können.

Ausführungsbeispielen liegt die Erkenntnis zugrunde, dass einerseits eine bessere Anpassung an während des späteren Betriebs des Linearwälzlagers herrschende Bedingungen dadurch erzielt werden kann, indem unterschiedliche Materialen für die Kettenglieder und für das Verbindungselement verwendet werden. So können beispielsweise die Kettenglieder aus einem gut spritzbaren Material hergestellt werden, während das Verbindungselement aus einem robusteren Material gefertigt wird. Eine Kompromissfindung bei der Auswahl des zu verwendenden Materials kann so gegebenenfalls vollständig vermieden werden.

Andererseits liegt Ausführungsbeispielen die Erkenntnis zugrunde, dass dadurch, dass die Aufnahmen für das Verbindungselement der einzelnen Kettenglieder so ausgebildet sind, dass diese mehrfach lösbar mit dem Verbindungselement koppelbar sind, ein modularer Aufbau der Gliederkettenkäfige möglich ist. Durch die freie Koppelbarkeit der Kettenglieder ist es möglich, erst bei Fertigung des Gliederkettenkäfigs seine Länge endgültig festzulegen. Auch können unterschiedliche Gliederketten gemäß Ausführungsbeispielen auf Basis identischer Kettenglieder durch Kopplung mit unterschiedlichen Verbindungselementen an ihr jeweiliges Einsatzgebiet angepasst werden, indem beispielsweise Verbindungselemente verwendet werden, die unterschiedliche (zweite) Materialien aufweisen. Somit kann es möglich sein, auf Basis gleicher Kettenglieder unterschiedliche Gliederkettenkäfige herzustellen, die sich beispielsweise hinsichtlich ihrer Längen und/oder ihrer Belastbarkeiten aufgrund der verwendeten Materialien für die Verbindungselemente unterscheiden.

Die Kettenglieder bzw. die Aufnahmen für die Verbindungselemente sind hierbei derart ausgebildet, dass diese mehrfach lösbar mit dem oder einem anderen Verbindungselement koppelbar sind. Die Aufnahmen für die Verbindungselemente können hierbei beispielsweise eine Ausnehmung aufweisen, die in einer Richtung, in der die Kettenglieder zu dem Gliederkettenkäfig zu verbinden oder zu koppeln sein sollen (Verbindungsrichtung), die Kettenglieder durchdringen, wobei die Ausnehmung ausgebildet ist, um das Verbindungselement aufzunehmen. Hierdurch kann es bei Ausführungsbeispielen beispielsweise möglich sein, die Kettenglieder auf einen Verbindungsdraht, eine Verbindungsschnur oder ein Verbindungsband als Verbindungselement aufzufädeln.

Im Falle kugelförmiger Wälzkörper können der erste und der zweite Abschnitt kreisringförmig ausgebildet sein, welche durch den Basisabschnitt des Kettenglieds in einem Abstand angeordnet sind, der geringer als der Durchmesser der Wälzkörper ist. Im Falle von zylinder-, walzen-, nadel- oder tonnenförmigen Wälzkörpen können der erste und der zweite Abschnitt rechteckige Haltestrukturen mit zentralen, rechteckigen Ausnehmungen aufweisen, die in einem Abstand angeordnet sind, der kleiner ist als ein Durchmesser der Wälzkörper in einer Ebene senkrecht zu ihrer Rotationsachse. Die Haltestrukturen können dabei unter einem beliebigen, dem späteren Einsatzgebiet angepassten Winkel zu dem Basisabschnitt angeordnet sein.

Bei weiteren Ausführungsbeispielen weisen die Kettenglieder ferner jeweils eine zweite Wälzkörperaufnahme auf Die ersten und zweiten Wälzkörperaufnahmen sind in einer zu der Verbindungsrichtung senkrechten Richtung angeordnet. Hierdurch ist es möglich, Gliederkettenkäfige nicht nur für einzelne Wälzkörperreihen, sondern für mehrere Reihen gleichzeitig zu fertigen.

Bei einigen Ausführungsbeispielen kann das erste Material wenigstens eines der Kettenglieder ein (gut) spritzbares Material, ein preisgünstiges Material oder Polyoxymethylen sein, während das zweite Material des Verbindungselements ein robustes Material, ein hochfestes Material, Metall, eine Metalllegierung, Stahl, Polyamid oder ein höherwertiger Kunststoff ist. Bei einigen Ausführungsbeispielen sind die Kettenglieder einstückig bzw. einteilig ausgeführt.

Nachfolgend werden Ausführungsbeispiele unter Bezugnahme auf die beigefügten Zeichnungen näher beschrieben und erläutert.
Fig. 1 zeigt eine perspektivische Darstellung eines Gliederkettenkäfigs gemäß einem Ausführungsbeispiel;
Fig. 2 zeigt eine perspektivische Darstellung eines einzelnen Kettengliedes des Gliederkettenkäfigs aus Fig. 1;
Fig. 3 zeigt eine perspektivische Darstellung eines weiteren Gliederkettenkäfigs für ein vierreihiges Linearwälzlager gemäß einem Ausführungsbeispiel;
Fig. 4 zeigt eine perspektivische Darstellung eines einzelnen Kettengliedes des Gliederkettenkäfigs aus Fig. 3;
Fig. 5a zeigt eine Darstellung eines Gliederkettenkäfigs während des Betriebs in einem Linearwälzlager mit Kettengliedern, wie sie in den Figuren 3 und 4 zu sehen sind;
Fig. 5b zeigt eine vergrößerte Darstellung der Darstellung aus Fig. 5a im Umlenkbereich; und
Fig. 6 zeigt eine Explosionsdarstellung einer Linearführung in Form eines Profilschienensystems gemäß einem Ausführungsbeispiel.

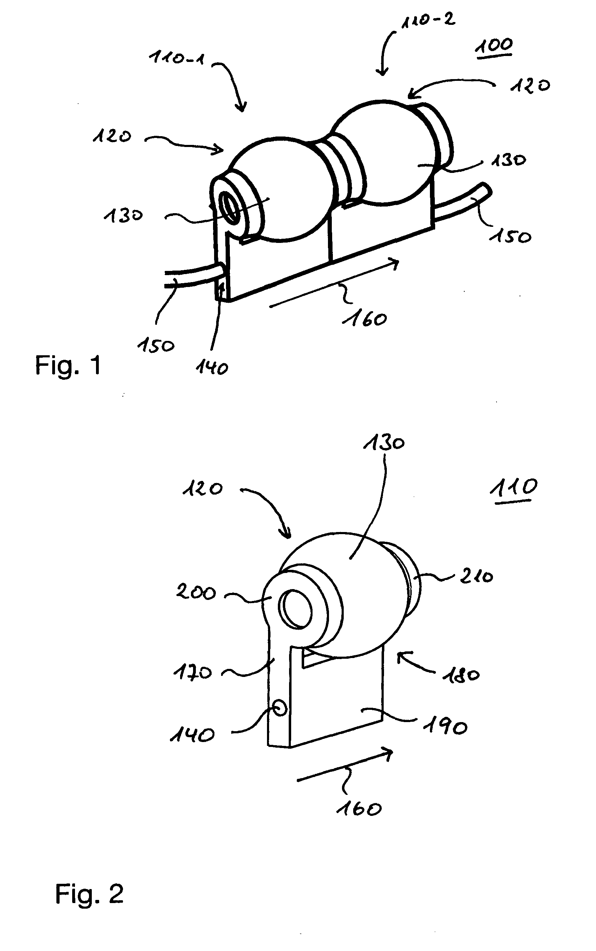

Mit Bezug auf die Figuren 1 bis 6 werden nachfolgend Ausführungsbeispiele näher beschrieben und hinsichtlich ihrer Funktionalität erläutert. Hierbei werden Elemente, also beispielsweise Maschinenelemente oder ihre Komponenten, Baugruppen, Systeme oder andere Objekte, die in einem Ausführungsbeispiel mehrfach oder auch in einer Figur mehrfach auftreten, im Rahmen der Beschreibung mit einem zusammenfassenden Bezugszeichen bezeichnet, sofern es sich um ihren Aufbau, ihre Funktion, ihre Verwendung, ihren Zweck oder ein sonstiges Merkmal oder eine sonstige Eigenschaft handelt, welche diesen gemein ist, sofern sich etwas anderes nicht explizit oder implizit ergibt. Soll hingegen die individuelle Entität bezeichnet werden, wird ein individuelles Bezugszeichen im Rahmen der Beschreibung verwendet. Hierdurch kann die Beschreibung gestrafft werden, da Ausführungsbeispiele gemeinsamer Entitäten nicht erneut beschrieben werden müssen. Teile der Beschreibung können vielmehr von einem Ausführungsbeispiel auf ein anderes übertragen werden, sofern sich nicht explizit oder implizit aus der Beschreibung etwas anderes ergibt. Angaben zu Dimensionierungen oder anderen spezifischen Angaben können daher auch ohne eine entsprechende Angabe für alle entsprechenden Entitäten oder einen Teil der entsprechenden Entitäten identisch ausgeführt sein, sodass diese gegebenenfalls gleich ausgestaltet sein können. Dies bedeutet jedoch nicht, dass nicht bei einigen Ausführungsbeispielen ein einzelnes, mehrere oder alle entsprechenden konstruktiven Merkmale von denen eines oder mehrerer entsprechender Entitäten abweichen können, sodass diese nicht mehr gleich implementiert sind.

Fig. 1 zeigt eine perspektivische Darstellung eines Gliederkettenkäfigs 100 gemäß einem Ausführungsbeispiel, welches ein erstes Kettenglied 110-1 und ein zweites Kettenglied 110-2 aufweist. Die beiden Kettenglieder 110 weisen jeweils eine erste Wälzkörperaufnahme 120 auf, die ausgebildet ist, um einen Wälzkörper 130 aufzunehmen und drehbar zu halten.

Bei den Wälzkörpern 130, wie sie in Fig. 1 gezeigt sind, handelt es sich um Kugeln. Entsprechend sind die ersten Wälzkörperaufnahmen 120 ausgeformt, werden jedoch erst im Zusammenhang mit weiteren strukturellen Merkmalen dieses Ausführungsbeispiels näher im Zusammenhang mit Fig. 2 beschrieben.

Die Kettenglieder 110 weisen ferner eine Aufnahme 140 für ein Verbindungselement 150 auf Die Aufnahmen 140 sind hierbei als die Kettenglieder in einer Verbindungsrichtung 160 durchdringende Ausnehmungen, also beispielsweise als Bohrungen oder Löcher, ausgestaltet. Die Verbindungsrichtung 160 ist bei der in Fig. 1 gezeigten Darstellung als Pfeil wiedergegeben.

Das Verbindungselement 150 ist in Form eines Verbindungsdrahts oder eines Verbindungsbands ausgestaltet und durchdringt die beiden Kettenglieder 110 und koppelt bzw. verbindet diese. Die Aufnahmen 140 der Kettenglieder 110 sind hierbei derart ausgestaltet, dass das Verbindungselement 150 oder auch ein anderes Verbindungselement die Kettenglieder 110 zunächst mehrfach lösbar koppelbar bzw. verbindbar macht.

Je nach konkreter Ausgestaltung eines solchen Ausführungsbeispiels kann gegebenenfalls das Verbindungselement 150 oder auch eine nachträgliche Bearbeitung eines oder mehrerer Kettenglieder die grundsätzliche mehrfach lösbare Koppelbarkeit beeinträchtigen. So kann beispielsweise bei Ausführungsbeispielen das Verbindungselement während der Fertigung des Gliederkettenkäfigs 100 derart verarbeitet werden, dass eine Lösung der Verbindung oder Kopplung mit einer Zerstörung des Verbindungselements einhergeht. Dies kann beispielsweise dadurch geschehen, dass die Enden des Verbindungselements 150 miteinander verschweißt oder auch mit Endstücken in einer nicht wieder zerstörungsfrei lösbaren Form verbunden werden. Auch ist grundsätzlich eine Verschweißung eines oder mehrerer Kettenglieder mit dem Verbindungselement 150 möglich, indem beispielsweise punktförmig das Kettenglied mit dem als Verbindungselement dienenden Verbindungsdraht verschweißt wird. Die genaue Art einer solchen Verarbeitung ist natürlich von der Art der verwendeten Materialien für die Kettenglieder 110 und des Verbindungselements 150 abhängig.

Wenigstens eines der beiden Kettenglieder 110-1, 110-2 weist hierbei ein erstes Material auf, bei dem es sich beispielsweise um ein gut spritzbares, aber nicht so biegewechselfestes und/oder preisgünstiges Material handeln kann. Als Material kommt so zum Beispiel Polyoxymethylen (POM) infrage. Bei unterschiedlichen Ausführungsbeispielen können selbstverständlich mehr als eines oder auch alle Kettenglieder, und somit gegebenenfalls auch ihre filigraneren Kugel- oder Wälzkörperhalterungen, das entsprechende erste Material aufweisen oder vollständig aus diesem bestehen.

Das Verbindungselement 150 kann beispielsweise als Verbindungsband, -schnur oder - draht ausgeführt sein, und weist ein zweites Material auf, das von dem Ersten verschieden ist. Hierbei kann es sich beispielsweise um ein im Vergleich zu dem ersten Material wesentlich robusteres Material handeln, wie etwa ein Metall, eine Metalllegierung, Stahl, Polyamid oder ein höherwertiger Kunststoff. Auch hier kann das Verbindungselement 150 vollständig oder zumindest abschnittsweise aus dem zweiten Material bestehen.

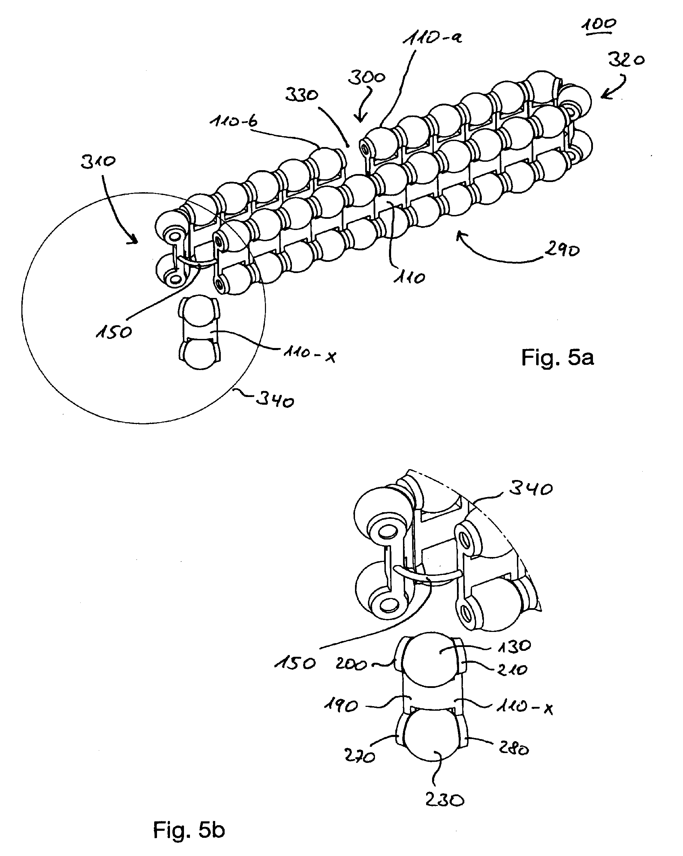

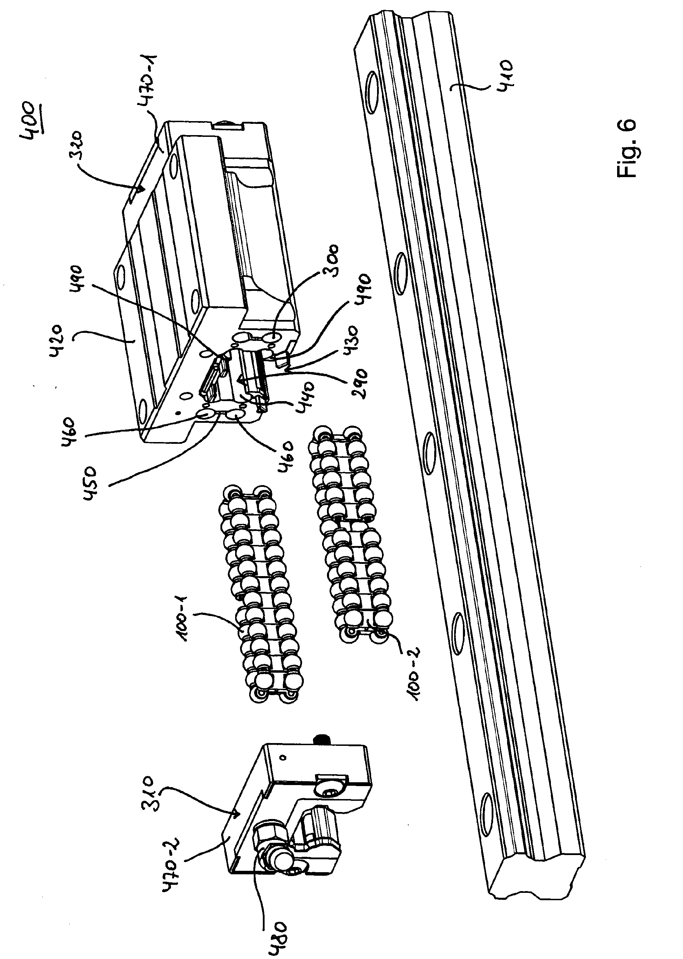

Wie im Zusammenhang mit den Figuren 5a, 5b und 6 noch näher beschrieben werden wird, kann bei Ausführungsbeispielen die Zahl der Kettenglieder 110 selbstverständlich unterschiedlich sein. Die Ausgestaltung der Aufnahmen 140 für das Verbindungselement 150 ermöglicht es, die Kettenglieder 110 oder - im vorliegenden Ausführungsbeispiel - Kugelhalterungen 110 in beliebiger Anzahl auf das Verbindungselement 150 aufzufädeln. Hierdurch ist es möglich, auch unterschiedliche, aber durchaus einer Norm entsprechende (genormte) Wagenlängen einer Linearführung mit entsprechend unterschiedlich langen Gliederkettenkäfigen 100 einfach und modular herzustellen. Entsprechend können Ausführungsbeispiele eine Mehrzahl, eine Vielzahl, wenigstens 10, wenigstens 15, wenigstens 20, oder wenigstens 25, wenigstens 30 oder auch wenigstens 40 Kettenglieder aufweisen.

Fig. 2 zeigt eine perspektivische Darstellung eines einzelnen Kettengliedes 110 des Gliederkettenkäfigs 100 aus Fig. 1. Das Kettenglied 110 bzw. seine erste Wälzkörperaufnahme 120 ist - wie zuvor bereits erläutert wurde - ausgebildet, um den Wälzkörper 130 in dem Kettenglied 110 alleine aufzunehmen und in Verbindungsrichtung 160 drehbar zu halten. Zu diesem Zweck weist das Kettenglied 110 aus den Figuren 1 und 2 eine im Wesentlichen U-förmige Struktur mit einem ersten Schenkel 170 und einem zu dem ersten Schenkel 170 im Wesentlichen parallel verlaufenden zweiten Schenkel 180 auf, die durch einen Basisabschnitt 190 des Kettenglieds 110 miteinander mechanisch verbunden sind. Aufgrund der perspektivischen Darstellung des Kettenglieds 110 in Fig. 2 wird der zweite Schenkel 180 durch den eingezeichneten Wälzkörper 130 verdeckt.

Der erste Schenkel 170 weist einen ersten Abschnitt 200 auf, der kreisringförmig ausgebildet ist. Entsprechend weist der zweite Schenkel 180 einen zweiten Abschnitt 210 auf, der ebenfalls kreisringförmig ausgebildet ist und - bezogen auf die Position des Wälzkörpers 130 - dem ersten Abschnitt gegenüberliegt. Die beiden Abschnitte 200, 210 weisen hierbei einen Abstand voneinander auf, der kleiner ist als ein Durchmesser der Kugel, die hier den Wälzkörper 130 bildet.

Im Falle anderer Wälzkörperformen, also beispielsweise im Fall von zylinder-, walzen-, nadel- oder tonnenförmiger Wälzkörper, können der erste und der zweite Abschnitt 200, 210 auch als rechteckige Haltestrukturen mit jeweils einer zentralen, rechteckigen Ausnehmung ausgebildet sein, die in einem Abstand angeordnet sind, der kleiner ist als ein Durchmesser der betreffenden Wälzkörper. Diese Haltestrukturen können dabei unter einem beliebigen, dem späteren Einsatzgebiet angepassten Winkel zu dem Basisabschnitt angeordnet sein.

Der Basisabschnitt 190 weist darüber hinaus bei diesem Ausführungsbeispiel auch die Aufnahme 140 für das in Fig. 2 nicht gezeigte Verbindungselement auf. Bei dieser handelt es sich um eine das Kettenglied 110 und den Basisabschnitt 190 in Verbindungsrichtung 160 durchdringende Ausnehmung auf Die Verbindungsrichtung 160 ist dabei die Richtung, in der im späteren zusammengesetzten Zustand die Kettenglieder 110 durch das Verbindungselement miteinander gekoppelt bzw. miteinander verbunden werden sollen. Bei dem in Fig. 2 gezeigten Ausführungsbeispiel handelt es sich um eine kreisförmige Bohrung, die den Basisabschnitt 190 durchdringt, sodass mehrere Kettenglieder auf einen Verbindungsdraht, eine Verbindungsschnur oder ein Verbindungsband auffädelbar sind.

Anders ausgedrückt sind der erste Schenkel 170 und der zweite Schenkel 180 daher in Verbindungsrichtung 160 voneinander in dem oben bezeichneten Abstand voneinander beabstandet angeordnet. Wie später noch im Zusammenhang mit Fig. 6 näher erläutert wird, entspricht die Verbindungsrichtung 160 der Abrollrichtung der Wälzkörper 130 während des Betriebs eines Linearwälzlagers mit einem Gliederkettenkäfig gemäß einem Ausführungsbeispiel.

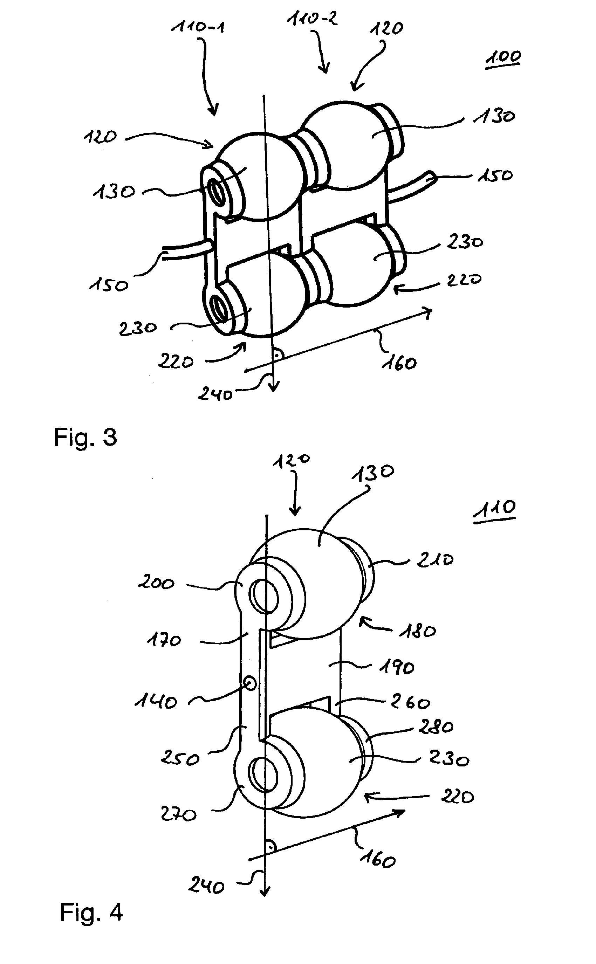

Fig. 3 zeigt ein weiteres Ausführungsbeispiel eines Gliederkettenkäfigs 100 für eine mehrreihige Wälzkörperkette. Das in Fig. 3 gezeigte Ausführungsbeispiel unterscheidet sich nur geringfügig von dem in den Figuren 1 und 2 Gezeigten. Die Kettenglieder 110 weisen vielmehr neben den ersten Wälzkörperaufnahmen 120 ferner zweite Wälzkörperaufnahmen 220 auf, die jeweils einen weiteren Wälzkörper 230 aufnehmen und diesen in Verbindungsrichtung 160 drehbar halten können. Die ersten und zweiten Wälzkörperaufnahmen 120, 220 sind hierbei entlang einer Richtung 240 angeordnet, die im Wesentlichen senkrecht zu der Verbindungsrichtung 160 stehen kann, sich jedoch von der Verbindungsrichtung 160 unterscheidet. Die Verbindungsrichtung 160 und die Richtung 240 schließen hierbei häufig einen Winkel von wenigstens 30°, von wenigstens 45°, von wenigstens 60°, von wenigstens 75° oder von im Wesentlichen 90° miteinander ein. Die Wälzkörperaufnahmen 120, 220 sind hierbei im Wesentlichen spiegelbildlich zueinander aufgebaut.

Um dies näher zu zeigen, ist in Fig. 4 eine perspektivische Darstellung eines einzelnen Kettengliedes 110 des Gliederkettenkäfigs 100 aus Fig. 3 dargestellt.

Das Kettenglied 110 weist neben dem ersten und dem zweiten Schenkel 170, 180 ebenfalls einen dritten und einen vierten Schenkel 250, 260 auf, die entlang der Richtung 240 mit dem ersten Schenkel 170 bzw. dem zweiten Schenkel 180 fluchtend angeordnet sind. Entsprechend weisen diese ebenfalls einen Abstand auf, der dem des ersten Schenkels 170 bezogen auf den zweiten Schenkel 180 entspricht. Der dritte Schenkel 250 weist einen dem ersten Abschnitt 200 entsprechenden dritten Abschnitt 270 auf Ebenso weist der vierte Schenkel 260 einen dem zweiten Abschnitt 210 entsprechenden vierten Abschnitt 280 auf.

Hierdurch weist die zweite Wälzlageraufnahme 220 ebenso wie die erste Wälzlageraufnahme 120 eine U-förmige Struktur auf, die durch den dritten Schenkel 250, den vierten Schenkel 260 und den Basisabschnitt 190 gebildet wird. Aufgrund der durch die fluchtende Anordnung der Schenkel 170, 180, 250, 260 realisierten Symmetrie weist das Kettenglied 110 aus Fig. 4 somit insgesamt eine H-förmige Gesamtstruktur auf.

Die durch die Schenkel 250, 260 und die entsprechenden beiden Abschnitte 270, 280 im Zusammenspiel mit dem Basisabschnitt 190 gebildete zweite Wälzkörperaufnahme 220 ist somit identisch zu der ersten Wälzkörperaufnahme 120 aufgebaut. Bei anderen Ausführungsbeispielen ist natürlich auch eine unterschiedliche Ausgestaltung der beiden Wälzkörperaufnahmen 120, 220 denkbar. So ist es beispielsweise möglich, Aufnahmen für Kugeln als Wälzkörper 130, 230 vorzusehen, die unterschiedliche Durchmesser aufweisen. Ebenso ist es möglich, Wälzkörperaufnahme 120, 220 für unterschiedliche Wälzkörperformen im Rahmen eines Kettenglieds miteinander zu kombinieren, also beispielsweise Aufnahmen für kugelförmige und zylinderförmige Wälzkörper. Ebenso ist es möglich, mehr als zwei Wälzkörperaufnahmen in ein Kettenglied 110 für mehr als zwei Reihen von Wälzkörpern zu integrieren.

Die Figuren 5a und 5b zeigen eine Darstellung eines Gliederkettenkäfigs 100 während des Betriebs in einem Linearwälzlager mit Kettengliedern, wie sie zuvor in den Figuren 3 und 4 abgebildet sind. Der Gliederkettenkäfig 100 weist hierbei 25 Kettenglieder 110 auf, von denen eines mit dem Bezugszeichen 110-x bezeichnet ist und zur Verdeutlichung der Verformungen, denen es während des Betriebs unterworfen sein kann, künstlich versetzt dargestellt ist. Der Gliederkettenkäfig 100 verläuft in einem Lastbereich 290 und in einem Rücklaufbereich 300 im Wesentlichen geradlinig, während er in einem ersten Umlenkbereich 310 und in einem zweiten Umlenkbereich 320, die zwischen dem Lastbereich 290 und dem Rücklaufbereich 300 angeordnet sind, eine zumindest abschnittsweise gebogene, häufig kreissegmentähnliche Form durchläuft. Wie im Zusammenhang mit Fig. 5b noch näher gezeigt wird, werden hierbei die Kettenglieder 110 (beispielsweise Kettenglied 110-x) deutlichen mechanischen Kräften unterworfen, sodass diese sich der Form des Umlenkbereichs zumindest teilweise anpassen.

Bevor jedoch hierauf näher eingegangen wird, zeigt Fig. 5a ferner, dass Gliederkettenkäfige 100 für Linearwälzlager häufig in Form einer offenen Kette, also nicht in geschlossener Form zum Einsatz kommen, auch wenn dies ebenfalls möglich ist. So zeigt Fig. 5a einen Bereich 330, in dem beide Enden des Gliederkettenkäfigs 100 einander nahekommen. Je nach konkreter Ausgestaltung des Gliederkettenkäfigs 100 kann es in diesem Fall ratsam sein, die beiden begrenzenden Kettenglieder 110-a und 110-b mit dem Verbindungselement 150, beispielsweise durch eine nachträglich vorgenommene punktförmige Verschweißung, zu verschweißen. Ebenfalls kann es ratsam sein, das Verbindungselement 150 an seinen Enden mit jeweils einem Bauteil zu versehen, um ein Hindurchgleiten (Durchrutschen) des Verbindungselements 150 durch die Aufnahmen 140 für das Verbindungselement 150 der Käfigelemente 110 zu unterbinden. Dies kann ebenfalls durch eine Veränderung der Form der Enden des Verbindungselements 150, also beispielsweise durch ein entsprechendes Aufweiten geschehen. Je nach verwendetem Material stehen hier unterschiedliche Verfahren, wie etwa ein Aufschmelzen im Falle eines Kunststoffs oder ein Kalt- oder Warmverformen im Falle eines metallischen Werkstoffs (z. B. Metall, Metalllegierung, Stahl) zur Verfügung. Auch eine Kombination verschiedener Methoden kann hier zum Einsatz kommen.

Anders ausgedrückt kann es hier ratsam sein, das Verbindungselement 150 und/oder wenigstens eines der Kettenglieder 110 derart auszugestalten, dass die Kettenglieder 110 hinsichtlich einer Bewegung relativ zu dem Verbindungselement derart beschränkt sind, sodass ein versehentliches Lösen der Kettenglieder von dem Verbindungselement 150 unterbunden wird.

Wie bereits zuvor erläutert wurde, sind Ausführungsbeispiele bei Weitem nicht auf die hier gezeigte Anzahl von Kettengliedern 110 beschränkt. Es handelt sich hierbei vielmehr um ein mögliches Ausführungsbeispiel.

Fig. 5b zeigt eine vergrößerte Darstellung des in Fig. 5a gezeigten ersten Umlenkbereichs, wobei der genaue Bereich der vergrößerten Darstellung durch einen Kreis 340 wiedergegeben ist. Fig. 5a zeigt die mechanische Verformung, denen ein Kettenglied, hier das Kettenglied 110-x, in einem Umlenkbereich unterworfen sein kann. Durch die mechanische Beanspruchung sind der erste und der zweite Abschnitt 200, 210, die die Führung und drehbare Halterung des Wälzkörpers 130 übernehmen, nicht mehr vollständig auf diametral gegenüberliegenden Seiten des Wälzkörpers 130 angeordnet, sondern haben sich entlang der Kugeloberfläche des Wälzkörpers 130 leicht verschoben. Die Abschnitte 200, 210 folgen hierbei zumindest teilweise dem Kreisbogen, den die Gliederkette 100 durchläuft. Hierbei werden die dem Inneren des Kreisbogens zugewandten Teile der Abschnitte 200, 210 aufeinander zu gebogen, während die dem Außenbereich zugewandten Teile entsprechend auseinandergebogen werden. Gleiches gilt ebenso für den dritten und den vierten Abschnitt 270, 280 und den Basisabschnitt 190 mit der darin verlaufenden Aufnahme für bzw. mit der darin verlaufenden Ausnehmung für das Verbindungselement 150.

Fig. 6 zeigt eine Explosionsdarstellung eines vierreihigen Profilschienensystems 400 mit einer Profilschiene 410 und einem Profilschienenwagen. Der Profilschienenwagen umfasst einen Führungswagen 420, der eine Ausnehmung 430 umfasst, die ausgebildet ist, um die Profilschiene 410 U-förmig zu umgreifen. Die Ausnehmung 430 erstreckt sich hierbei in einer Verfahrrichtung des Führungswagens 420 und umfasst vier Bohrungen 440, in denen während des Betriebs Wälzkörper des Linearwälzlagers angeordnet sind. Diese Bohrungen 440 bilden die Lastbereiche 290 des Linearwälzlagers.

Der Führungswagen 420 umfasst ferner zu beiden Seiten der Ausnehmung 430 jeweils zwei durch jeweils eine Nut 450 miteinander verbundene Bohrungen 460, die zusammen die Rücklaufbereiche 300 des Linearwälzlagers bilden. Der Rücklaufbereich 300 ist hierbei ausgebildet, um die Kettenglieder 110 der Gliederkette 100 aufzunehmen. Anders ausgedrückt weist der Rücklaufbereich 300 die Nut 450 auf, sodass diese den Basisabschnitt 190 der Kettenglieder 110 aufnehmen und führen kann.

Der Führungswagen 420 wird in Verfahrrichtung zu beiden Seiten jeweils von einer Endplatte 470-1, 470-2 mit Abschlussdichtung begrenzt, in der entsprechende Ausnehmungen vorgesehen sind, um die Umlenkbereiche 310, 320 zu bilden. Hierbei kann es gegebenenfalls ratsam sein, eine der Nut 450 entsprechende Nut in den Umlenkbereichen 310, 320 aufgrund der gegebenenfalls beschränkten Elastizität des Kettengliedmaterials (vgl. Fig. 5b) großzügiger ausgeformt vorzusehen, in der die Basisabschnitte 190 der Kettenglieder 110 durch den entsprechenden Umlenkbereich hindurchtreten können.

Die Endplatte 470-2 weist darüber hinaus einen optionalen Schmiermittelnippel 480 auf, der ausgebildet ist, um Schmiermittel in ein in die Endplatte 470-2 optional integriertes Schmiermittelreservoir zu befüllen.

Die Lastbereiche 290, die Rücklaufbereiche 300 sowie die Umlenkbereiche 310, 320 nehmen bei dem in Fig. 6 gezeigten Profilschienensystem 400 zwei Gliederketten 100-1, 100-2 auf, wie sie in den Figuren 3 bis 5 gezeigt und beschrieben wurden. Die Gliederketten 100-1, 100-2 sind hierbei, wie dies auch die Figuren 3 und 4 bereits gezeigt haben, mit entsprechenden Kugeln als Wälzkörper bestückt. Diese können in den genannten Bereichen 290, 300, 310, 320 unendlich umlaufen, sodass es sich bei dem in Fig. 6 gezeigten Profilschienensystem 400 um eines ohne Hub- oder Amplitudenbegrenzung handelt. Da die beiden Gliederketten 100-1, 100-2 jeweils zwei Reihen von Wälzkörpern 130, 230 aufweisen, wobei zu jeder Seite der Ausnehmung 430 je ein Gliederkettenkäfig umläuft, handelt es sich bei dem in Fig. 6 gezeigten Linearwälzlager bzw. bei dem dort gezeigten Profilschienenwagen um eine vierreihige Variante.

Die Lastbereiche 290 und die Rücklaufbereiche 300 verlaufen parallel zu der Verfahrrichtung und sind in diesem Bereich im Wesentlichen geradlinig ausgeformt. In diesen Bereichen stimmt auch die Verbindungsrichtung der Gliederkettenkäfige 100 mit der Verfahrrichtung (oder seiner entgegengesetzten Richtung) überein.

Wie im Zusammenhang mit den Figuren 5a und 5b bereits erörtert wurde, sind die Gliederkettenkäfige 100 bei diesem Ausführungsbeispiel nicht geschlossen. Um daher eine einfache Handhabbarkeit des Linearwälzlagers bzw. des Profilschienenwagens zu ermöglichen, ist an die vier Bohrungen 440 jeweils eine optionale Rückhalteschiene 490 für die Wälzkörper angebracht worden, die ein Herausfallen der Gliederkettenkäfige 100 unterbinden soll. Diese kann jedoch auch entfallen, wenn eine Gefahr des Herausfallens eine untergeordnete Rolle spielen sollte oder aber auch, wenn die Gliederkettenkäfige 100 geschlossen oder verschließbar sind.

Selbstverständlich sind Ausführungsbeispiele nicht auf die in Fig. 6 gezeigte Form beschränkt, sondern können in einer großen Anzahl von Variationen umgesetzt werden. So ist beispielsweise die Form der Wälzkörper ebenso wenig, wie die Anzahl der Reihen der Wälzkörper, die Länge der Gliederkettenkäfige, ihre Materialwahl, oder ihre genaue konstruktive Ausgestaltung durch die bisher beschriebenen Ausführungsformen beschränkt.

Ausführungsbeispiele ermöglichen so ein Design mit Käfiggliedern, die auf beispielsweise ein Verbindungsband aufgefädelt werden. Hierbei können gegebenenfalls Käfighalterung und Verbindungsschnur durch ein Bauteil, nämlich das Verbindungselement gebildet sein.

Ausführungsbeispiele können so als Kugelkette für Linearlager ebenso eingesetzt werden, wie als Gliederkettenkäfig für Profilschienenführungen, Linearsysteme oder Profilschienenwagen mit Kugelkette sowie bei vielen weiteren Anwendungen.

## Patentansprüche

1. Gliederkettenkäfig (100) für ein Linearwälzlager, mit folgenden Merkmalen:
einem ersten Kettenglied (110) und einem zweiten Kettenglied (110), wobei das erste und das zweite Kettenglied jeweils eine erste Wälzkörperaufnahme (120) und eine Aufnahme (140) für ein Verbindungselement (150) aufweisen; und
einem Verbindungselement (150), das mit den Aufnahmen (140) für das Verbindungselement des ersten und des zweiten Kettenglieds gekoppelt ist,
wobei die Aufnahmen (140) für das Verbindungselement des ersten und des zweiten Kettenglieds ausgebildet sind, um mit dem oder einem anderen Verbindungselement mehrfach lösbar koppelbar zu sein;
wobei das erste und/oder das zweite Kettenglied ein erstes Material aufweist; und
wobei das Verbindungselement ein zweites, von dem ersten Material verschiedenes Material aufweist;
wobei die Wälzkörperaufnahme (120) des ersten und des zweiten Kettenglieds (110) jeweils ausgebildet ist, um den Wälzkörper (130) in dem Gliederkettenkäfig (110) alleine aufzunehmen und drehbar zu halten; und
wobei die Kettenglieder (110) auf das Verbindungselement auffädelbar sind.

2. Gliederkettenkäfig (100) nach Anspruch 1, bei dem die Wälzkörperaufnahmen (120) des ersten und des zweiten Kettenglieds (110) jeweils einen ersten Abschnitt (200) und einen zweiten Abschnitt (210) aufweisen, die ausgebildet sind, um jeweils einen Wälzkörper (130) zwischen dem ersten und dem zweiten Abschnitt aufzunehmen, wobei der Wälzkörper (130) beispielsweise eine Kugel ist und der erste und der zweite Abschnitt beispielsweise kreisringförmig ausgestaltet sind.

3. Gliederkettenkäfig (100) nach einem der vorhergehenden Ansprüche, bei dem das erste und das zweite Kettenglied ferner jeweils eine zweite Wälzkörperaufnahme (220) aufweist, wobei die ersten (120) und die zweiten Wälzkörperaufnahmen (220) in einer Richtung (240) angeordnet sind, die sich von einer Verbindungsrichtung (160) unterscheidet, wobei die Verbindungsrichtung (160) durch eine Richtung zweier benachbarter Kettenglieder (110) gegeben ist, und wobei die Richtung (240) beispielsweise senkrecht auf der Verbindungsrichtung (160) steht.

4. Gliederkettenkäfig (100) nach einem der vorhergehenden Ansprüche, bei dem das erste Material ein spritzbares Material oder Polyoxymethylen ist, und wobei das zweite Material ein robustes Material, ein hochfestes Material, ein Metall, eine Metalllegierung, Stahl oder Polyamid ist.

5. Gliederkettenkäfig (100) nach einem der vorhergehenden Ansprüche, bei dem das erste und das zweite Kettenglied (110) jeweils einstückig ausgeführt sind.

6. Gliederkettenkäfig (100) nach einem der vorhergehenden Ansprüche, bei dem die Aufnahme (140) für das Verbindungselement eine das Kettenglied (110) in einer Verbindungsrichtung (160) durchdringende Ausnehmung (140) aufweist, die ausgebildet ist, um das Verbindungselement (150) aufzunehmen.

7. Gliederkettenkäfig (100) nach einem der vorhergehenden Ansprüche, bei dem das Verbindungselement (150) ein Verbindungsdraht, eine Verbindungsschnur oder ein Verbindungsband ist.

8. Linearwälzlager mit folgenden Merkmalen:
einem Gliederkettenkäfig (100) nach einem der vorhergehenden Ansprüche;
einer Mehrzahl von Wälzkörpern (130, 230), von denen jeweils eine in der Wälzkörperaufnahme (120, 220) des ersten und des zweiten Kettenglieds (110) aufgenommen sind;
einem Lastbereich (290), einem Rücklaufbereich (300) und einem Umlenkbereich (310, 320), der zwischen dem Lastbereich und dem Rücklaufbereich angeordnet ist,
wobei der Gliederkettenkäfig (100) mit der Vielzahl von Wälzkörpern (130, 230) in dem Lastbereich (290), dem Rücklaufbereich (300) und dem Umlenkbereich (310, 320) angeordnet ist.

9. Verfahren zum Bereitstellen eines Gliederkettenkäfigs (100) für ein Linearwälzlager, umfassend:
Bereitstellen eines ersten und eines zweiten Kettenglieds (110), wobei das erste und das zweite Kettenglied jeweils eine erste Wälzkörperaufnahme (120) und eine Aufnahme (140) für ein Verbindungselement aufweisen, und wobei das erste und/oder das zweite Kettenglied (110) ein erstes Material aufweisen; und
Bereitstellen eines Verbindungselements (150), das mit den Aufnahmen (140) für das Verbindungselement des ersten und des zweiten Kettenglieds (110) gekoppelt ist, wobei das Verbindungselement (150) ein zweites, von dem ersten Material verschiedenes Material aufweist,
wobei die Aufnahmen (140) für das Verbindungselement des ersten und des zweiten Kettenglieds (110) ausgebildet sind, um mit dem oder einem anderen Verbindungselement mehrfach lösbar koppelbar zu sein;
wobei das Bereitstellen des Verbindungselements ein Auffädeln der Kettenglieder (110) auf das Verbindungselement (150) umfasst; und
wobei die Wälzkörperaufnahme (120) des ersten und des zweiten Kettenglieds (110) jeweils ausgebildet ist, um den Wälzkörper (130) in dem Gliederkettenkäfig (110) alleine aufzunehmen und drehbar zu halten.

## Claims

1. Link-chain cage (100) for a linear anti-friction bearing, having the following features:
a first chain link (110) and a second chain link (110), the first and the second chain link having in each case a first rolling-body seat (120) and a seat (140) for a connecting element (150); and
a connecting element (150) which is coupled to the seats (140) for the connecting element of the first and the second chain link,
the seats (140) for the connecting element of the first and the second chain link being configured to be capable of being coupled releasably multiple times to the connecting element or another connecting element;
the first and/or the second chain link having a first material; and
the connecting element having a second material which is different from the first material;
the rolling-body seat (120) of the first and the second chain link (110) being configured in each case to receive the rolling body (130) in the link-chain cage (100) on its own and to hold it rotatably; and
it being possible for the chain links (110) to be threaded onto the connecting element.

2. Link-chain cage (100) according to Claim 1, in which the rolling-body seats (120) of the first and the second chain link (110) in each case have a first section (200) and a second section (210) which are configured to receive in each case one rolling body (130) between the first and the second section, the rolling body (130) being, for example, a ball, and the first and the second section being, for example, of circularly annular configuration.

3. Link-chain cage (100) according to one of the preceding claims, in which, furthermore, the first and the second chain link in each case have a second rolling-body seat (220), the first (120) and the second rolling-body seats (220) being arranged in a direction (240) which differs from a connecting direction (160), the connecting direction (160) being given by a direction of two adjacent chain links (110), and the direction (240) lying, for example, perpendicularly on the connecting direction (160).

4. Link-chain cage (100) according to one of the preceding claims, in which the first material is an injection-mouldable material or polyoxymethylene, and the second material is a robust material, a high-strength material, a metal, a metal alloy, steel or polyamide.

5. Link-chain cage (100) according to one of the preceding claims, in which the first and the second chain link (110) are in each case of single-piece configuration.

6. Link-chain cage (100) according to one of the preceding claims, in which the seat (140) for the connecting element has a recess (140) which penetrates the chain link (110) in a connecting direction (160) and is configured to receive the connecting element (150).

7. Link-chain cage (100) according to one of the preceding claims, in which the connecting element (150) is a connecting wire, a connecting cord or a connecting strap.

8. Linear anti-friction bearing having the following features:
a link-chain cage (100) according to one of the preceding claims;
a plurality of rolling bodies (130, 230), of which in each case one is received in the rolling-body seat (120, 220) of the first and the second chain link (110) ;
a load-bearing region (290), a return region (300) and a deflection region (310, 320) which is arranged between the load-bearing region and the return region,
the link-chain cage (100) being arranged with the multiplicity of rolling bodies (130, 230) in the load-bearing region (290), the return region (300) and the deflection region (310, 320).

9. Method for providing a link-chain cage (100) for a linear anti-friction bearing, comprising:
provision of a first and a second chain link (110), the first and the second chain link in each case having a first rolling-body seat (120) and a seat (140) for a connecting element, and the first and/or the second chain link (110) having a first material; and
provision of a connecting element (150) which is coupled to the seats (140) for the connecting element of the first and the second chain link (110), the connecting element (150) having a second material which is different from the first material,
the seats (140) for the connecting element of the first and the second chain link (110) being configured to be capable of being releasably coupled multiple times to the connecting element or another connecting element;
the provision of the connecting element comprising threading of the chain links (110) onto the connecting element (150); and
the rolling-body seat (120) of the first and the second chain link (110) being configured in each case to receive the rolling body (130) in the link-chain cage (100) on its own and to hold it rotatably.

## Revendications

1. Cage à chaîne à maillons (100) pour un palier à roulement linéaire, présentant les caractéristiques suivantes :
un premier maillon de chaîne (110) et un deuxième maillon de chaîne (110), le premier et le deuxième maillon de chaîne comprenant respectivement un premier logement de corps de roulement (120) et un logement (140) pour un élément de liaison (150) ; et
un élément de liaison (150) qui est accouplé aux logements (140) pour l'élément de liaison du premier et du deuxième maillon de chaîne,
les logements (140) pour l'élément de liaison du premier et du deuxième maillon de chaîne étant réalisés pour pouvoir être accouplés de manière libérable plusieurs fois à l'élément de liaison ou à un autre élément de liaison ;
le premier et/ou le deuxième maillon de chaîne comprenant un premier matériau ; et
l'élément de liaison comprenant un deuxième matériau, différent du premier matériau ;
le logement de corps de roulement (120) du premier et du deuxième maillon de chaîne (110) étant respectivement réalisé pour recevoir le corps de roulement (130) seul dans la cage à chaîne à maillons (110) et pour l'y retenir de manière rotative ; et
les maillons de chaîne (110) pouvant être enfilés sur l'élément de liaison.

2. Cage à chaîne à maillons (100) selon la revendication 1, dans laquelle les logements de corps de roulement (120) du premier et du deuxième maillon de chaîne (110) comprennent respectivement une première portion (200) et une deuxième portion (210) qui sont réalisées pour recevoir respectivement un corps de roulement (130) entre la première et la deuxième portion, le corps de roulement (130) étant par exemple une bille et la première et la deuxième portion étant par exemple configurées en forme d'anneau circulaire.

3. Cage à chaîne à maillons (100) selon l'une quelconque des revendications précédentes, dans laquelle le premier et le deuxième maillon de chaîne comprennent en outre respectivement un deuxième logement de corps de roulement (220), les premiers (120) et les deuxièmes logements de corps de roulement (220) étant disposés dans une direction (240) qui est différente d'une direction de liaison (160), la direction de liaison (160) étant définie par une direction de deux maillons de chaîne adjacents (110), et la direction (240) étant par exemple perpendiculaire à la direction de liaison (160).

4. Cage à chaîne à maillons (100) selon l'une quelconque des revendications précédentes, dans laquelle le premier matériau est un matériau pulvérisable ou du polyoxyméthylène, et le deuxième matériau étant un matériau robuste, un matériau de résistance élevée, un métal, un alliage métallique, de l'acier ou du polyamide.

5. Cage à chaîne à maillons (100) selon l'une quelconque des revendications précédentes, dans laquelle le premier et le deuxième maillon de chaîne (110) sont respectivement réalisés d'une seule pièce.

6. Cage à chaîne à maillons (100) selon l'une quelconque des revendications précédentes, dans laquelle le logement (140) pour l'élément de liaison comprend un évidement (140) traversant le maillon de chaîne (110) dans une direction de liaison (160), lequel évidement est réalisé pour recevoir l'élément de liaison (150).

7. Cage à chaîne à maillons (100) selon l'une quelconque des revendications précédentes, dans laquelle l'élément de liaison (150) est un fil de liaison, un cordon de liaison ou une bande de liaison.

8. Palier à roulement linéaire présentant les caractéristiques suivantes :
une cage à chaîne à maillons (100) selon l'une quelconque des revendications précédentes ;
une pluralité de corps de roulement (130, 230), parmi lesquels respectivement un est reçu dans le logement de corps de roulement (120, 220) du premier et du deuxième maillon de chaîne (110) ;
une région de charge (290), une région de retour (300) et une région de déviation (310, 320) qui est disposée entre la région de charge et la région de retour,
la cage à chaîne à maillons (100) avec la pluralité de corps de roulement (130, 230) étant disposée dans la région de charge (290), dans la région de retour (300) et dans la région de déviation (310, 320).

9. Procédé de production d'une cage à chaîne à maillons (100) pour un palier à roulement linéaire, comportant :
la production d'un premier et d'un deuxième maillon de chaîne (110), le premier et le deuxième maillon de chaîne comprenant respectivement un premier logement de corps de roulement (120) et un logement (140) pour un élément de liaison, et le premier et/ou le deuxième maillon de chaîne (110) comprenant un premier matériau ; et
la production d'un élément de liaison (150) qui est accouplé aux logements (140) pour l'élément de liaison du premier et du deuxième maillon de chaîne (110), l'élément de liaison (150) comprenant un deuxième matériau, différent du premier matériau,
les logements (140) pour l'élément de liaison du premier et du deuxième maillon de chaîne (110) étant réalisés pour pouvoir être accouplés de manière libérable plusieurs fois à l'élément de liaison ou à un autre élément de liaison ;
la production de l'élément de liaison comportant un enfilage des maillons de chaîne (110) sur l'élément de liaison (150) ; et
le logement de corps de roulement (120) du premier et du deuxième maillon de chaîne (110) étant respectivement réalisé pour recevoir le corps de roulement (130) seul dans la cage à chaîne à maillons (100) et pour l'y retenir de manière rotative.
